# EUROPEAN PATENT APPLICATION

(11) **EP 2 497 392 A1**
(43) Date of publication of application: **12.09.2012**
(21) Application number: 12159012.9
(22) Date of filing: 12.03.2012
(51) Int. Cl.: A47C 23/06

(54) **Bed slat stowing system and method**

(30) Priority: 11.03.2011 GB 201104171
(71) Applicant: Homelux Nenplas Limited, Ashbourne, Derbyshire DE6 1HA (GB)
(72) Inventor: Swinfield, Murray, Ashbourne, Derbyshire DE6 1HA (GB); Heynes, Mark, Ashbourne, Derbyshire DE6 1HA (GB)
(74) Representative: Patel, Binesh

(57) **Abstract**

There is provided a bed slat stowing system comprising a bed frame having a bed portion and a stowing portion, a pair of opposed channels extending between the bed portion and the stowing portion, and a plurality of slats arranged to be movably joined to the channels such that the slats are able to move along the channels. In the bed portion, each slat is provided in an in-use orientation, and in the stowing portion, each slat is provided in a stowing orientation. Each slat is pivotally joined to the channels such that the slat is rotatable relative to the channels between the in-use and stowing orientations. Also provided is a slat end cap having a mouth arranged to receive a bed slat, and a pivot member arranged to be movably and pivotally joined to a channel.

## Description

The present invention relates to a bed slat stowing system and method, particularly, but not exclusively, for use in caravans, motor homes and other such locations.

Conventional bed slat stowing systems for caravans are designed to occupy as little space as possible when they are not in use. In a caravan, space is at a premium. In these conventional systems, when a bed is not in use, it is disassembled and stowed away in order to free up space for use within the caravan. This may be achieved by providing a bed frame which includes two opposed support surfaces for supporting a plurality of slats, which are joined by a flexible connector (e.g. a length of fabric material), and which are arranged to support a mattress upon their upper surfaces when they are in an in-use configuration, i.e. when they are being supported by the support surfaces.

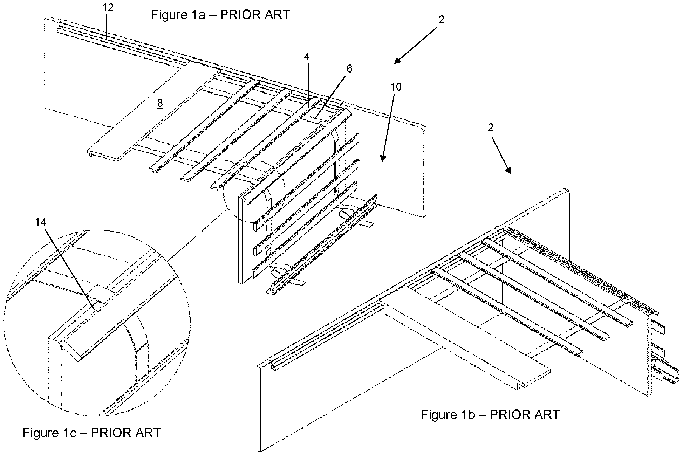

For example, Figure 1 schematically shows part of a conventional caravan bed frame (2) which is arranged to support a plurality of slats (4), which are joined together by a flexible connector (6). At a head end of the caravan bed, there is provided a handle (8), which is also flexibly connected to the slats (4). As can be seen in Figure 1, typically there is a storage space (10) provided at the foot of the bed frame (2). Although not shown as such in Figure 1, this space (10) is often closed off for use as a cupboard or storage compartment. When the bed is in use, the slats (4) are supported on a support surface (12) and arranged regularly in a spaced apart arrangement, suitable for receiving a mattress upon the slats. When the bed is not in use, the slats (4) can be taken out of engagement with the support surface (12) upon which they rest, when they are forming a bed. The slats (4) are not joined to the support surface (12) and so can be lifted off, or slid along the support surface (12). Typically, the slats (4) are moved towards the foot of the bed frame (2) and left in a pile in the space (10). The flexible connector (6) ensures that the slats (4) are kept roughly in sequence, so that when handle (8) is used to pull the flexible connector (6) back out of the space (10) when a bed needs to be made up the slats are relatively conveniently ordered in the sequence in which they are intended to be supported by the support surface (12).

As can be seen in Figure 1, the slats (4) are haphazardly piled up in the space (10) when not in use. As a result, slats might snag when pulled out from being stowed away towards their in-use position. Also the amount of available space for storage space (10) is not particularly efficiently provided. Also, slats stored in this manner can be damaged through wear and tear.

Figure 1c is a close up schematic representation of a guide surface (14) provided near the foot of the bed frame (2), and arranged to guide the slats (4) when they are being pulled out of the space (10) onto the support surface (12).

According to an aspect of the invention there is provided a bed slat stowing system. The bed slat stowing system comprises a bed frame having a bed portion and a stowing portion. The slat stowing system further comprises a pair of opposed channels extending between the bed portion and the stowing portion. The slat stowing system further comprises a plurality of slats arranged to be movably joined to the channels such that the slats are able to move along the channels. In the bed portion, each slat is provided in an in-use orientation. In the stowing portion, each slat is provided in a stowing orientation. Each slat is pivotally joined to the channels such that the slat is rotatable relative to the channel between the in-use and stowing orientations.

Advantageously, the slats are joined to the channels when in the bed portion, and also when in the stowing portion. Therefore the slats are not ever haphazardly piled up and therefore are less likely to get snagged. Also, the slats are rotatable relative to the channel between the in-use and stowing orientations, which provides a particularly flexible and efficient way of stowing the slats tidily.

Every slat in the stowing portion may be provided in the same stowing orientation. An advantage of this feature is that particularly close packing of the slats is allowed - there are no major gaps between slats. This tidy stowing provides less likelihood of being haphazardly piled up and becoming snagged when moving from the stowing orientation to the in-use orientation. Also, wear and tear on the slats is minimised as they are moved between the bed portion and the stowing portion and vice versa.

In the in-use orientation, slats may be arranged to provide a flat surface for supporting a mattress. A flat surface is particularly good for supporting a mattress, or other bedding.

The slats may be longer than they are wide in cross section, and in the stowing orientation they may take up less space in the direction in which the channels extend compared to the in-use orientation. Advantageously, there is provided a space-saving in the direction of the channel, in addition to the tidy stowing. Optionally, in the stowing orientation the slats take up the least possible space in the direction in which the channels extend compared to the in-use orientation.

The slats are longer than they are wide in cross section, and in the stowing orientation, a longer dimension of each slat may extend substantially vertically. This provides a particularly efficient configuration in terms of space saving in a horizontal plane.

The channels may comprise substantially straight channels. This is particularly advantageous for ease of manufacture. In conjunction with some of the above mentioned optional features, there are further particular advantages in that this ease of manufacture compliments the longer dimension of each slat extending substantially vertically in order to provide an efficient space saving, particularly when the straight channel extends in a horizontal plane.

Optionally, the or each slat comprises an end cap arranged to be movably and pivotally joined to the channels, and to receive a body portion of the slat. Advantageously, the end cap may provide protection for the ends of a slat, which is received. Another advantage is that the end cap can be easily fitted to a conventional slat arrangement of the type shown in Figures 1a to 1c. Therefore conventional slat arrangements can be adapted to take advantage of the features of this invention. The end cap can be retro-fitted to an existing, typical slat arrangement.

Optionally, each slat comprises a pivot member arranged to join the slat to the channel and around which the slat is arranged to rotate relative to the channel.

The pivot member may comprise a cylindrical slider. This is a particularly suitable shape for the dual function of moving through the channel (by sliding) and rotating relative to the channel.

Optionally, the pivot member is spaced from the centre of gravity of the slat. Advantageously, this feature allows the slat to rotate around the pivot point under its own weight, i.e. via the influence of gravity alone. This allows a mechanically simple version of the invention to be provided. This might be desirable in order to reduce the likelihood of failure of more complex mechanical parts.

Each slat may be urged to a base orientation. The base orientation may comprise the stowing orientation. Advantageously, this feature allows the benefits of the invention to be enjoyed without excessive modification of current systems in which support is provided for slats when in use as a bed (as previously described in relation to Figures 1a to 1c). Each slat may be urged to the base orientation by gravity. Advantageously, this feature again provides a simple system in which gravitational force is used to provide a benefit of the invention. Other alternatives are within the scope of this invention, such as ones in which biasing means such as springs or other alternative means are used to urge each slat towards the base orientation.

Optionally, the slat stowing system comprises a support member arranged to support slats in the bed portion in the in-use orientation. Advantageously, support is provided when the slats are in use to form a bed. Typically, this is when they will be carrying significant weight. Optionally, the support member supports the slats in the in-use orientation against the urging towards the stowing orientation. Optionally, the support member comprises a transition section at the end of the bed portion, the transition section comprising a sloped surface between the bed portion and the stowing portion. Advantageously, the sloped surface provides a smooth, gradual transition for slats travelling between the in-use and stowing orientations, thus minimising the risk of the slats becoming snagged or caught or trapped against sharply edged surfaces, and also reducing wear and tear on the slats due to sudden, jerky movements.

The slat stowing system may further comprise a flexible connector arranged to link the slats to each other. This feature makes it easier to move the slats as a group.

The slat stowing system may further comprise a handle joined to at least one slat. Preferably the handle is joined to an endmost slat. Further preferably the endmost slat is located towards the bed portion of the system. Each of these features makes it easy to push and pull the slats as a group.

Optionally, the support member also supports the handle, and when all of the slats are in the stowing portion, there remains insufficient space for the handle to move to the stowing portion. Advantageously, at least part of the handle remains in the bed portion and is conveniently ready to pull out slats when the bed needs to be made up.

According to another aspect of the invention, there is provided a method of stowing slats in a system having a bed frame, having a bed portion and a stowing portion. The system also having a pair of opposed channels extending between the bed portion and the stowing portion and a plurality of slats being arranged to be movably joined to the channels such that the slats are able to move along the channels. The method comprises pivotally joining each slat to the channels such that the slat is rotatable relative to the channel between an in-use orientation while it is located in the bed portion and a stowing orientation while it is in the stowing portion.

The advantages mentioned above in relation to the first aspect of the invention equally apply to this aspect.

Each slat may be supported against rotation under gravity in the bed portion, and relatively unsupported against such rotation in the stowing portion. Accordingly, a particularly efficient system is provided in which gravitational force is used to stow slats tidily whilst minimising the likelihood of wear and tear on each slat.

Embodiments of the invention will now be described, by way of example only, with reference to the accompanying drawings in which:
Figures 1a, 1b and 1c schematically show a conventional, prior art bed slat stowing system;
Figure 2 schematically shows a bed slat stowing system according to an embodiment in which slats are located in a bed portion of the system;
Figure 3 schematically shows the system of Figure 2 in which the slats are located in a stowing portion of the system;
Figure 4 shows a bed slat end cap according to an embodiment of the invention;
Figure 5 schematically shows a side view of slats located in a channel of the system of Figure 2; and
Figure 6 schematically shows a portion of the system of Figure 2.

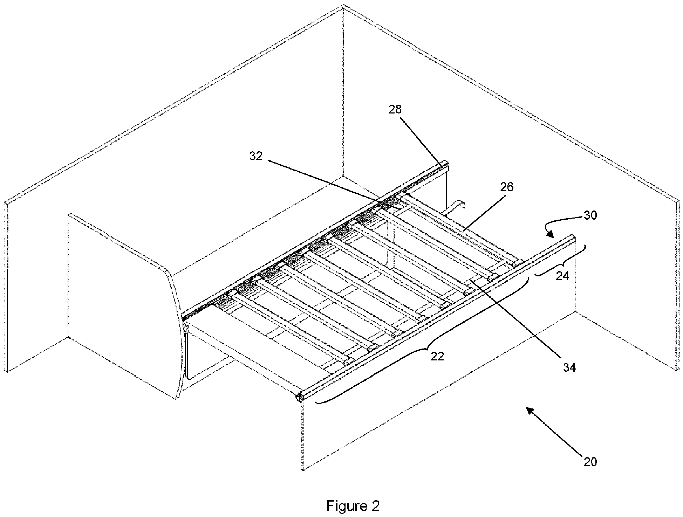

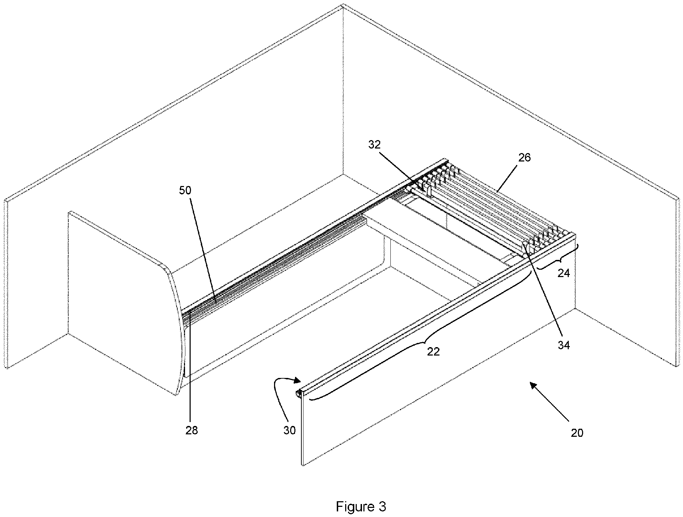

Referring to Figure 2, there is shown a region within a caravan. Within this region, there is provided a space for a bed which can be selectively assembled and disassembled. When disassembled, the space otherwise occupied by the bed in use can be used for other purposes. Figures 2 and 3 show a bed slat stowing system including a bed frame (20) which in this embodiment includes side walls and an end wall towards the foot of the bed. In other embodiments different types of frames might be provided as will be apparent to the skilled person.

In this embodiment, the bed frame (20) comprises a bed portion (22) towards a front, or head, end of the bed. The bed frame (20) also includes a stowing portion (24) towards an opposite, foot end of the bed. The bed slat stowing system also comprises a plurality of slats (26) which are substantially identical. The bed slat stowing system also comprises a pair of opposed channels (28, 30) extending between the bed portion (22) and the stowing portion (24). The slats (26) are arranged to be movably joined to these channels (28, 30) such that they can move along the channels between the bed portion and the stowing portion. As illustrated in Figures 2 and 3, in use, the slats (26) are located in the bed portion (22), and when not in use, the slats (26) are located in stowing portion (24).

It is also a feature of this invention that when the slats (26) are located in the bed portion (22), each slat is provided in an in-use orientation, whereas when the slats are located in the stowing portion (24), they are provided in a different, stowing orientation. In order to allow easy movement between the different orientations, each slat (26) is pivotally joined to the channels (28, 30) so that the slat is able to rotate relative to the channels between the in-use and stowing orientations.

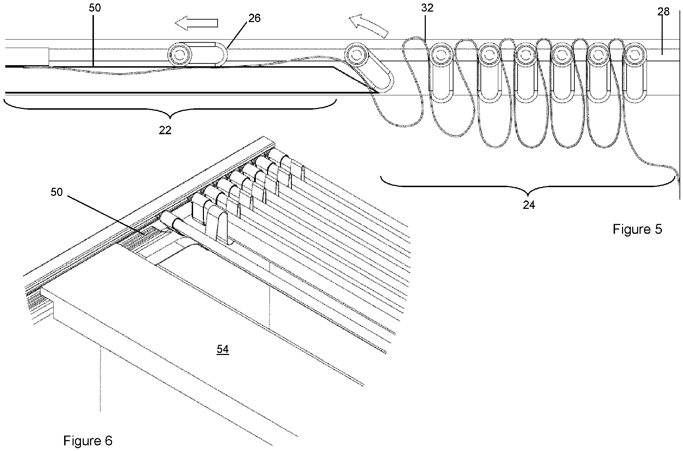

In this embodiment, when the slats (26) are located in the bed portion, they are spaced apart. When they are located in the stowing portion (24), they are located closer together (as shown in Figure 5). This is made easier by their 'flipped' orientation.

In this embodiment, the slats (26) are joined by two flexible connectors (32, 34). These flexible connectors (32, 34) are provided towards ends of the slats (26) and comprise pieces of fabric. In other embodiments such connectors may not be provided, or only one flexible connector might be provided, or maybe more flexible connectors might be provided. The flexible connectors facilitate moving the slats (26) as a group.

For example, in other embodiments the flexible connector(s) might not comprise pieces of fabric. They might be made of a plastics material, or any other suitable material. In other embodiments the flexible connector(s) might be provided away from an end of the slats, e.g. towards the main body of each slat, or towards the centre of each slat.

In this embodiment, the flexible connectors (32, 34) also facilitate the closer grouping of the slats when they are located in the stowing portion (24). Their flexible nature allows the slats to not remain a fixed distance apart.

In this embodiment each slat is elongate and wooden. In other embodiments different configurations and materials may be used. In cross section the slat is generally rectangular and has a length greater than its width. In the in-use orientation, each slat is arranged to provide a flat surface for supporting a mattress or other bedding. Preferably, the or each slat provides a flat, upper surface which is the cross-sectionally longer surface of the slat. In this way, the maximum surface area is presented to a supported mattress.

Referring to Figure 3, when stowed in the stowing portion (24), slats are rotated so that in the stowing orientation they take up less space in the direction in which the channels (28, 30) extend, as compared to the in-use orientation (see Figure 2).

This is a result of the cross-sectional width of each slat being less than its cross-sectional length. Since the slats are joined to the channels (28, 30) this provides a particularly efficient and organised stowing configuration. In this particular embodiment, the slats are rotated through substantially 90 degrees between the in-use orientation shown in Figure 2 and the stowing orientation shown in Figure 3. In this embodiment, the slats are arranged horizontally in the in-use orientation and are arranged vertically in the stowing orientation. In this particular embodiment, due to the shape of the slats and the amount of rotation between the orientations, this provides a stowing configuration in which substantially the least possible space is taken up in the direction in which the channels extend by the slats (26). As expressed previously, space is at a premium in locations such as caravans and motor homes etc.

In the present embodiment, each slat in the stowing portion is provided in the same stowing orientation, as can be seen in Figure 3. Again, this preferable feature allows close packing of the slats without significant gaps.

The channels (28, 30) in this embodiment are substantially straight. This is advantageous for ease of manufacture. Other embodiments are envisaged in which the channels are not straight along the entire length. In particular, the channels may be kinked or bent at the junction between the bed portion and the stowing portion. However, for ease of manufacture the present embodiment is particularly useful.

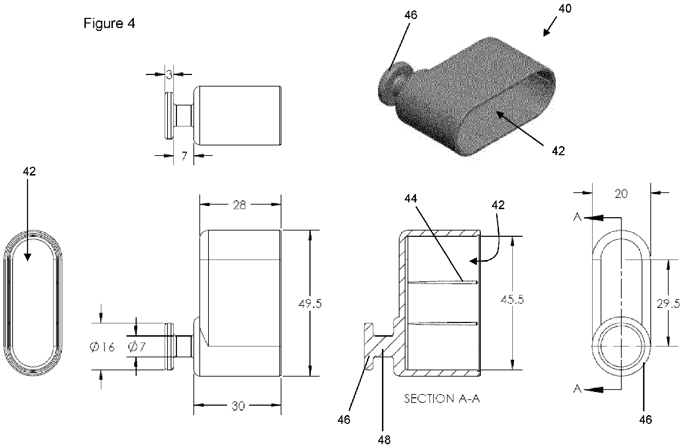

In this particular embodiment, each slat (26) has a rectangular shaped body portion such as the conventional slats of the prior art, shown in Figures 1a to 1c. Each slat of this embodiment also comprises a separately formed end cap (40), as illustrated in Figure 4. The dimensions shown in Figure 4 are in mm, and are illustrative for this embodiment only. Clearly the invention can be used with other dimensions of end cap, slat etc. In other embodiments other shapes of slats and end cap might be provided as will be apparent to the skilled person. Figure 4 shows various views of the end cap (40). In this embodiment the end cap (40) is formed of plastic and comprises a mouth (42), which is shaped and profiled to receive an end of a slat (26). In this way, slats (26) which are similar in shape to conventional prior art slats can be used with the other features of the system according to the invention in order to obtain the benefits of the invention. The end cap (40) therefore facilitates modification of existing bed slat systems to take advantage of the present inventive concept.

Within the mouth (42) of the end cap (40) there are ribs (44) which facilitate gripping of an inserted slat (26). This is an optional feature.

The end cap (40) also includes a pivot member (46) which is arranged to be movably and pivotally joined to one of the channels (28, 30). In this embodiment the pivot member (46) comprises a cylindrical slider which can be easily located within a channel (28, 30) and slid along the channel. The cylindrical slider (46) is joined to the rest of the end cap (40) by a neck region (48) which is also cylindrical and smaller in diameter than the cylindrical slider (46) so that the pivot member (46) is joined to the channel (28, 30) when it is located therein by virtue of the shape of the channel. The channel is U or C shaped such that the cylindrical slider (46) can be slidably located within the channel without being easily or accidentally removed from the channel. Other embodiments might not include a channel, but might control or guide the slats in moving from the stowed to the in-use position using another suitable mechanism.

Due to the cylindrical slider and neck, the slat can rotate relative to the channel around the axis of the pivot member.

Preferably, the pivot member is spaced from the centre of gravity of the slat. In this embodiment the end cap (40) is elongate (to match the shape of the slats) and the pivot member (46) is located towards an end of the elongate end cap. Therefore, when the pivot member (46) movably and pivotally joins the end cap (and the slat located therein) to the channel, and with corresponding arrangements at the other end of the slat (i.e. a slat and end cap movably and pivotally located within the other of the opposed channels (28, 30)), then the slat is arranged to freely rotate in this embodiment under its own weight about the pivot member whilst remaining joined to the channels (28, 30). Due to the shape and configuration of the slats and the channels, the slats will, without any other influence, naturally hang freely and fall towards the stowing orientation as shown in Figure 3 in the stowing portion (24). The offset pivot is a particularly important and advantageous feature of this embodiment. It allows the invention to be implemented in a mechanically efficient way, without requiring complex or unwieldy engineering.

This is also illustrated in Figures 5 and 6. Figure 5 shows a side view of slats (26) located in the channel (28), both in the stowing orientation and the in-use orientation. As mentioned above, naturally each slat is urged to a base orientation which in this embodiment is the stowing orientation, and each slat is urged to the base orientation by gravity in this embodiment. Therefore in the bed portion (22), in this embodiment there is provided a support member (50) to support the slats in the in-use orientation so that a mattress can be successfully supported. The support member (50) in this embodiment is a support surface which is arranged to support a flat lower surface of each slat (26) while it is in the bed portion (22). In this way, due to the shape of the slats (26) they are supported in the in-use orientation whilst in the bed portion.

The support member thereby provides support against the natural urging of the slats towards the stowing orientation whilst they are located in the bed portion. In between the bed portion (22) and the stowing portion (24), the support member (5) comprises a sloped surface (52), which as can be seen from Figure 5 provides a gradual, guided transition for each slat so that it can smoothly transition between the stowing orientation and the in-use orientation and vice versa. The transition section does not have to be a slope. In other embodiments it could be another feature, such as a vertical cut, bar, pin, or moulding, to help the slat rotate at the joint between the stowing and in-use portions.

In this embodiment, the slat stowing system also comprises a handle (54), which is a generally rectangular, relatively large (compared to the size of the slats) wooden member. Preferably, as in this embodiment, the handle (54) is joined to the frontmost (at the head end) slat (26) by the flexible connectors (32, 34) so that the handle and slats can be moved together as a group. The handle (54) is profiled so that it is also able to be supported by the support member (50). Support members (50) are provided in correspondence with the channels (28, 30) on both sides of the bed portion so that support is provided to the slats (and handle) at both ends. The support members (50) in this embodiment are located underneath the channels (28, 30) and run parallel thereto. However, in other embodiments, the support member may be provided above the channels (28, 30) for example an arrangement might be provided where the slat ends include a second support projection, in addition to the pivot member, which is, in the in-use orientation located above the pivot member and which corresponds with a support channel (which is equivalent to the support member), and wherein the support channel is provided in the bed portion, but not in the stowing portion, so that the slats can naturally flip freely towards the stowing orientation after moving away from the bed portion. In other embodiments, the handle might not be relatively large compared to the size of the slats - it could be relatively small. A handle might be provided on one or more of the slats, perhaps at each end of the slat, or in the centre of the slat.

In this embodiment, as shown in Figure 6, when all of the slats (26) are in the stowing portion (24) there is no space for the handle (54) to also move away from the bed portion. This is useful since the handle (54) is relatively large compared to the slats in this embodiment, and so this is not suitable for stowing in the stowing portion.

Advantageously, the orderly and space efficient nature of the stowing configuration provided by this invention allows more efficient use of the space, both underneath and above the channels (28, 30) in the stowing portion. The space underneath the channels can be used as a cupboard, and also the space above the channels might be used as a storage space if a shelf is placed on the top of the channels (28, 30) in the stowing portion, for example. Also the orderly nature of the stowing of the slats in the stowing portion minimises the likelihood of snagging up or wear and tear on the slats, e.g. caused by unnecessary and possible unintended contact with each other.

Allowing the slats to hang freely in the stowing orientation provides a simple and effective mechanism for achieving the effect of this invention. However a forced or otherwise urged rotation (other than just via gravity) may be implemented in other embodiments of the invention. For example arrangements of springs or further support surfaces may be provided so that in the stowing orientation the slats do not hang totally freely but are externally urged towards a different desired stowing orientation. The different desired stowing orientation will still provide an advantageous configuration relative to the prior art system in which slats are stored in a relatively haphazard manner.

Various other modifications will be apparent to the skilled person, without departing from the scope of the claims. For example, the channels might not be parallel. In such a non-parallel system, slats might be adjustable in length (e.g. telescopic) - this is a more complicated embodiment, but still within the scope of the claims. Other such variations will be apparent to the skilled person.

When in use as a bed, slats are spaced apart. Due to the space saving provided by this invention, more slats might be provided in a bed space than in a conventional system. This is because more slats can be stored in a similar space using this invention compared to conventional system. As a result of being able to provide more slats in the same amount of stowing space, less, or no, spacing might be provided between slats in the bed portion, when in use as a bed. This might be useful especially when a bed is expected to carry a lot of weight, or extra slat numbers or strength is required for any other reason.

In some embodiments, the slat may comprise some or all of the features of the end cap as described in relation to Figure 4. For example the slat might have an integrally formed pivot or an integrally formed means for movably joining it to the channel, or both. The slat may have such an integral formation on one of its ends and an end cap on the other of its ends, or perhaps this type of integral formation might be provided on both of its ends. When integrally formed, some or all features of the end cap might be machined from the slat.

## Claims

1. A bed slat stowing system comprising:
a bed frame having a bed portion and a stowing portion,
a pair of opposed channels extending between the bed portion and the stowing portion,
a plurality of slats arranged to be movably joined to the channels such that the slats are able to move along the channels,
wherein in the bed portion, each slat is provided in an in-use orientation, and in the stowing portion, each slat is provided in a stowing orientation, and
wherein each slat is pivotally joined to the channels such that the slat is rotatable relative to the channels between the in-use and stowing orientations.

2. The slat stowing system of Claim 1, wherein the slats are longer than they are wide in cross-section, and in the stowing orientation they take up less space, optionally substantially the least possible space, in the direction in which the channels extend compared to the in-use orientation.

3. The slat stowing system of Claim 1 or Claim 2, wherein the slats are longer than they are wide in cross-section, and in the stowing orientation, a longer dimension of each slat extends substantially vertically.

4. The slat stowing system of any preceding claim, wherein the or each slat comprises an end cap arranged to be movably and pivotally joined to the channels, and to receive a body portion of the slat.

5. The slat stowing system of any preceding claim, wherein each slat comprises a pivot member arranged to join the slat to the channel and around which the slat is arranged to rotate relative to the channel, and optionally
wherein the pivot member is spaced from the centre of gravity of the slat.

6. The slat stowing system of Claim 5, wherein the pivot member comprises a cylindrical slider.

7. The slat stowing system of any preceding claim, wherein each slat is urged to a base orientation, and optionally
wherein the base orientation comprises the stowing orientation.

8. The slat stowing system of Claim 7, wherein each slat is urged to the base orientation by gravity.

9. The slat stowing system of any preceding claim, wherein the system comprises a support member arranged to support slats in the bed portion in the in-use orientation, and optionally,
when dependent on Claim 7 or Claim 8, wherein the support member supports the slats in the in-use orientation against the urging towards the stowing orientation, and separately optionally
wherein the support member comprises a transition section at the end of the bed portion, the transition section comprising a sloped surface between the bed portion and the stowing portion.

10. The slat stowing system of any preceding claim, wherein the system further comprises a handle joined to at least one slat, preferably an endmost slat, preferably the endmost slat towards the bed portion, and optionally,
when dependent on Claim 9, wherein the support member also supports the handle, and when all slats are in the stowing portion, there remains insufficient space for the handle to move to the stowing portion.

11. The slat stowing system of any preceding claim comprising any one, or more, or all of:
• wherein every slat in the stowing portion is provided in the same stowing orientation;
• wherein in the in-use orientation, slats are arranged to provide a flat surface for supporting a mattress;
• wherein the channels comprise substantially straight channels;
• wherein the system further comprises a flexible connector arranged to link the slats to each other.

12. A method of stowing slats in a system having a bed frame having a bed portion and a stowing portion, and a pair of opposed channels extending between the bed portion and the stowing portion, a plurality of slats being arranged to be movably joined to the channels such that the slats are able to move along the channels, the method comprising pivotally joining each slat to the channels such that the slat is rotatable relative to the channel between an in-use orientation while it is located in the bed portion and a stowing orientation while it is in the stowing portion.

13. The method of Claim 12 wherein each slat is supported against rotation under gravity in the bed portion and relatively unsupported against such rotation in the stowing portion.

14. A slat end cap comprising a mouth arranged to receive a bed slat, and a pivot member arranged to be movably and pivotally joined to a channel, and optionally
wherein the pivot member is offset from the centre of gravity of the slat.

15. The slat end cap of Claim 14, wherein the pivot member comprises a cylindrical slider.
